# EUROPEAN PATENT SPECIFICATION

(11) **EP 4 589 930 B1**
(45) Date of publication and mention of the grant of the patent: **25.11.2026**
(21) Application number: 24837279.9
(22) Date of filing: 04.06.2024
(51) Int. Cl.: G06F 12/0804, G06F 12/0811, G06F 12/0831, G06F 12/084, G06F 12/0815, G06F 12/0895

(54) **DATA PROCESSING METHOD AND APPARATUS, AND ELECTRONIC DEVICE AND STORAGE MEDIUM**
DATENVERARBEITUNGSVERFAHREN UND -VORRICHTUNG SOWIE ELEKTRONISCHE VORRICHTUNG UND SPEICHERMEDIUM
PROCÉDÉ ET APPAREIL DE TRAITEMENT DE DONNÉES, DISPOSITIF ÉLECTRONIQUE ET SUPPORT DE STOCKAGE

(30) Priority: 27.11.2023 CN 202311598492
(43) Date of publication of application: 23.07.2025
(73) Proprietor: Hygon Information Technology Co., Ltd., Tianjin 300392 (CN)
(72) Inventor: CHENG, Yongbo, Tianjin 300392 (CN); LOU, Lifang, Tianjin 300392 (CN); CAO, Jun, Tianjin 300392 (CN); GENG, Jianbo, Tianjin 300392 (CN)
(74) Representative: Maiwald GmbH
(86) International application number: PCT/CN2024/097159
(87) International publication number: WO 2025/112410

(56) References cited:
- CN-A- 104 991 868
- CN-A- 114 116 531
- CN-A- 116 089 116
- CN-A- 117 560 422
- US-A1- 2010 332 767
- US-A1- 2011 078 492
- US-A1- 2013 042 077
- US-A1- 2014 115 268
- US-A1- 2018 157 590
- US-A1- 2018 173 660

## Description

### TECHNICAL FIELD

Embodiments of the present disclosure relate to a data processing method, a data processing apparatus, an electronic device, and a storage medium.

### BACKGROUND

A network-on-a-chip (NOC) system is a necessary bus system used for implementing mutual communication between respective components in a large-scale integrated circuit. A system on chip (SOC) includes various types of subsystems, for example, CPUs, GPUs, memories, IO devices, etc.; each type of subsystem may have a plurality of entities; and these entities need to communicate with each other (through data signals and control signals) to operate collaboratively.

In an SOC system, frequent read and write interactions are required between a plurality of subsystem entities. In order to ensure high-performance data exchange between the respective subsystems, the NOC system provides a large bandwidth exchange network for connecting the respective on-chip components. Through the network, efficient data transmission may be implemented between the respective subsystems. When caches corresponding to different subsystems operate cached data with the same address, a coherence problem arises. To address the problem, many techniques have emerged to maintain data coherence. US 2013/042077 A1 is primarily concerned with ensuring coherent handling of writeback requests and with avoiding redundant writebacks when data has become clean.

### SUMMARY

At least one embodiment of the present disclosure provides a data processing method, and the data processing method includes: in response to receiving a write request from a first cache to write first data back to a memory, writing, by a cache coherence node, the first data into the memory or discarding the first data, where the write request carries the first data, the cache coherence node is configured to maintain coherence of data stored in a plurality of caches, and the plurality of caches include the first cache; and after the writing, by the cache coherence node, the first data into the memory or discarding the first data, returning, by the cache coherence node, a write response signal to the first cache to directly end a processing operation on the write request.

For example, in a data processing method provided by at least one embodiment of the present disclosure, in response to receiving the write request from the first cache to write the first data back to the memory, the writing, by the cache coherence node, the first data into the memory or discarding the first data, includes: in response to receiving the write request from the first cache to write the first data back to the memory, determining, by the cache coherence node, whether the first cache is the same as a cache currently exclusively holding the first data as recorded on a cache coherence node side; and in response to determining that the first cache is the same as the cache currently exclusively holding the first data as recorded on the cache coherence node side, writing, by the cache coherence node, the first data into the memory.

For example, in a data processing method provided by at least one embodiment of the present disclosure, after the writing, by the cache coherence node, the first data into the memory or discarding the first data, the returning, by the cache coherence node, the write response signal to the first cache to directly end the processing operation on the write request, includes: after the writing, by the cache coherence node, the first data into the memory, returning, by the memory, a write response to the cache coherence node indicating that the first data has been written into the memory; and in response to receiving the write response from the memory indicating that the first data has been written into the memory, returning, by the cache coherence node, the write response signal to the first cache indicating that the first data has been written back to the memory, to directly end the processing operation on the write request.

For example, a data processing method provided by at least one embodiment of the present disclosure further includes: after the writing, by the cache coherence node, the first data into the memory, setting, by the cache coherence node, a data state of the first cache to an invalid state, a shared state, or an exclusive state, where the invalid state indicates that the first cache does not cache the first data, the shared state indicates that the first cache and other cache both cache the first data, and the exclusive state indicates that only the first cache caches the first data.

For example, a data processing method provided by at least one embodiment of the present disclosure further includes: in response to receiving a read request from a second cache for the first data and determining that the first data is in an exclusive state or a shared state in the first cache as recorded by a cache coherence node side, initiating, by the cache coherence node, a monitor signal to the first cache; and in response to receiving, by the first cache, the monitor signal after initiating the write request, returning, by the first cache, a monitor response carrying the first data to the cache coherence node in response to the monitor signal.

For example, a data processing method provided by at least one embodiment of the present disclosure further includes: in response to receiving the monitor response, returning, by the cache coherence node, the first data to the second cache; and after receiving the first data, returning, by the second cache, a message to the cache coherence node indicating that the first data has been received to end the read request.

For example, in a data processing method provided by at least one embodiment of the present disclosure, in response to receiving the monitor response, the returning, by the cache coherence node, the first data to the second cache, includes: in response to receiving the monitor response, returning, by the cache coherence node, the first data to the second cache, and setting a data state of the second cache to an exclusive state, where the exclusive state indicates that only the second cache caches the first data.

For example, in a data processing method provided by at least one embodiment of the present disclosure, after the writing, by the cache coherence node, the first data into the memory or discarding the first data, the returning, by the cache coherence node, the write response signal to the first cache to directly end the processing operation on the write request, includes: after receiving the message, discarding, by the cache coherence node, the first data written into the cache coherence node side by the write request, and returning the write response signal to the first cache to directly end the processing operation on the write request.

For example, in a data processing method provided by at least one embodiment of the present disclosure, after receiving the message, the discarding, by the cache coherence node, the first data written into the cache coherence node side by the write request, includes: in response to determining that the first data written into the cache coherence node side by the write request is invalid data after receiving the message, discarding, by the cache coherence node, the first data written into the cache coherence node side by the write request.

At least one embodiment of the present disclosure further provides an electronic device, including a plurality of caches and a cache coherence node. The plurality of caches include a first cache. The cache coherence node is configured to: in response to receiving a write request from a first cache to write first data back to a memory, write the first data into the memory or discard the first data; and return a write response signal to the first cache to directly end a processing operation on the write request after the cache coherence node writes the first data into the memory or discards the first data, where the write request carries the first data, and the cache coherence node is configured to maintain coherence of data stored in the plurality of caches.

For example, in an electronic device provided by at least one embodiment of the present disclosure, the cache coherence node is further configured to: in response to receiving the write request from the first cache to write the first data back to the memory, determine whether the first cache is the same as a cache currently exclusively holding the first data as recorded on a cache coherence node side; and in response to determining that the first cache is the same as the cache currently exclusively holding the first data as recorded on the cache coherence node side, write the first data into the memory.

For example, in an electronic device provided by at least one embodiment of the present disclosure, the memory is configured to, after the cache coherence node writes the first data into the memory, return a write response to the cache coherence node indicating that the first data has been written into the memory; and the cache coherence node is further configured to, in response to receiving the write response from the memory indicating that the first data has been written into the memory, return the write response signal to the first cache indicating that the first data has been written back to the memory, to directly end the processing operation on the write request.

For example, in an electronic device provided by at least one embodiment of the present disclosure, the cache coherence node is further configured to, in response to receiving a read request from a second cache for the first data and determining that the first data is in an exclusive state or a shared state in the first cache as recorded by a cache coherence node side, initiate a monitor signal to the first cache; and the first cache is configured to, in response to receiving the monitor signal after initiating the write request, return a monitor response carrying the first data to the cache coherence node.

At least one embodiment of the present disclosure further provides a data processing apparatus, including a memory and a processor. The memory is configured to store computer-executable instructions. The processor is configured to execute the computer-executable instructions, and the computer-executable instructions, when executed by the processor, implement the method according to any one of the above-mentioned embodiments.

At least one embodiment of the present disclosure further provides a non-transitory storage medium, which stores computer-executable instructions non-transitorily, and the computer-executable instructions, when executed by a processor, implement the method according to any one of the above-mentioned embodiments.

### BRIEF DESCRIPTION OF DRAWINGS

In order to clearly illustrate the technical solution of the embodiments of the present disclosure, the drawings of the embodiments will be briefly described in the following; it is obvious that the described drawings are only related to some embodiments of the present disclosure and thus are not limitative of the present disclosure.
Fig. 1 shows a schematic diagram of an electronic device;
Fig. 2A shows a schematic diagram of an electronic device performing data read;
Fig. 2B shows a schematic diagram of an electronic device performing data writeback;
Fig. 3A shows a schematic flowchart of a data processing method provided by at least one embodiment of the present disclosure;
Fig. 3B shows a schematic diagram of an electronic device provided by at least one embodiment of the present disclosure performing data writeback;
Fig. 4 shows a schematic diagram of a read/write operation of an electronic device provided by at least one embodiment of the present disclosure when there is a read/write conflict;
Fig. 5 shows a schematic diagram of an electronic device provided by at least one embodiment of the present disclosure;
Fig. 6 shows a schematic diagram of a data processing apparatus provided by at least one embodiment of the present disclosure; and
Fig. 7 shows a schematic diagram of a non-transitory storage medium provided by at least one embodiment of the present disclosure.

### DETAILED DESCRIPTION

In order to make objects, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "left," "right" and the like are only used to indicate relative position relationship, and when the position of the object which is described is changed, the relative position relationship may be changed accordingly.

In order to maintain clarity and conciseness of the following illustration of the embodiments of the present disclosure, detailed illustration of some known functions and components is omitted in the present disclosure.

In a running process of a computer system including a plurality of processors (or processor cores) and a plurality of caches, data with the same address may exist in different caches simultaneously. In order to ensure the data with the same address in the respective caches to always remain consistent, a directory-based coherence protocol has been developed. The protocol may track the state of data in the cache, for example, a directory storage structure may be implemented by adopting a static random access memory (SRAM) just like the cache. For example, the directory storage structure may also be implemented by adopting other form of memory, as long as directory storage may be implemented.

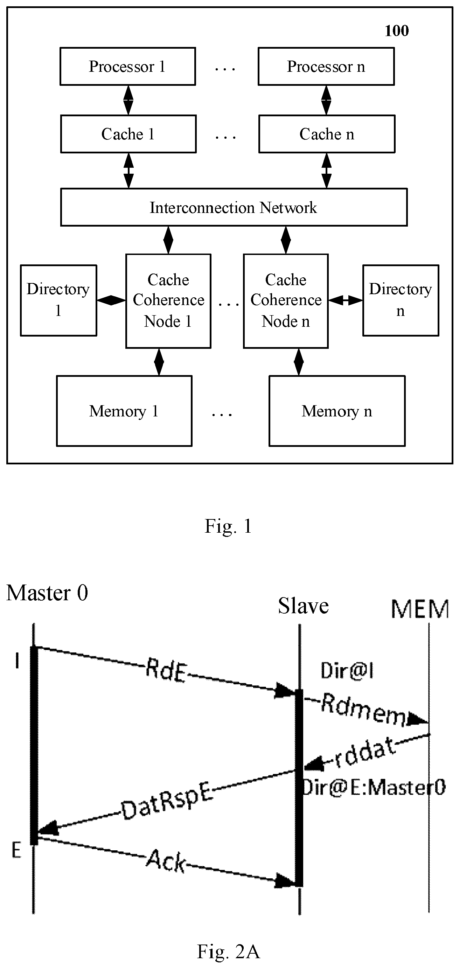

Fig. 1 shows a schematic diagram of an electronic device (or an electronic system) 100. As shown in Fig. 1, the electronic device 100 may include a plurality of caches 1 to n, processors (or processor cores) 1 to n, an interconnection network, cache coherence nodes 1 to n, memories 1 to n, and directories 1 to n, etc.

For example, each cache among the caches 1 to n is configured to be capable of storing data storage information corresponding to at least one piece of data information. For example, the caches 1 to n may each include one or more sub-caches.

For example, the cache coherence nodes 1 to n may respectively help track cached data states in the caches 1 to n; and the cached data states, for example, include: states such as the caches 1 to n only having a single copy of the cached data, the caches 1 to n having a plurality of copies of the cached data, or data only existing in a main memory. The cache coherence nodes 1 to n will track states of the caches 1 to n of the processors 1 to n (e.g., each processor in Fig. 1 may include one or more sub-processors), and store tracked state information (or directory information) in the directories 1 to n. When the cache coherence node finds a coherence transaction while listening to a bus, it will query state information tracked in the directories 1 to n and send a corresponding probe to complete coherence maintenance.

For example, the directories 1 to n are configured to store directory information corresponding to data information stored in the caches 1 to n to maintain cache coherence. For example, a directory includes a plurality of storage groups; and each storage group may store a plurality of pieces of directory information. For example, when directory information needs to be stored into a directory, the directory places the directory information into a corresponding storage group according to a mapping relationship.

For example, as shown in Fig. 1, the interconnection network (e.g., the network-on-a-chip (NOC), etc.) in the system is directly coupled with the caches 1 to n, and is also directly coupled with the cache coherence nodes 1 to n. The interconnection network is a public communication trunk for information transmission, for example, the interconnection network may be a transmission harness composed of electronic components such as conductors.

For example, as shown in Fig. 1, the cache coherence nodes 1 to n are configured to respectively couple the directories 1 to n to the interconnection network; and the cache coherence nodes 1 to n are configured to respectively couple the memories 1 to n to the interconnection network, thereby maintaining coherence of all data stored in the caches 1 to n.

For example, in a non uniform memory access (NUMA) architecture, different combinations of processors (or processor cores) and memory devices belong to different nodes; and therefore, in directory coherence-based design, a directory of a static random access memory (SRAM) structure will be set up in the vicinity of each memory controller. In the NUMA architecture, each node has its own local memory.

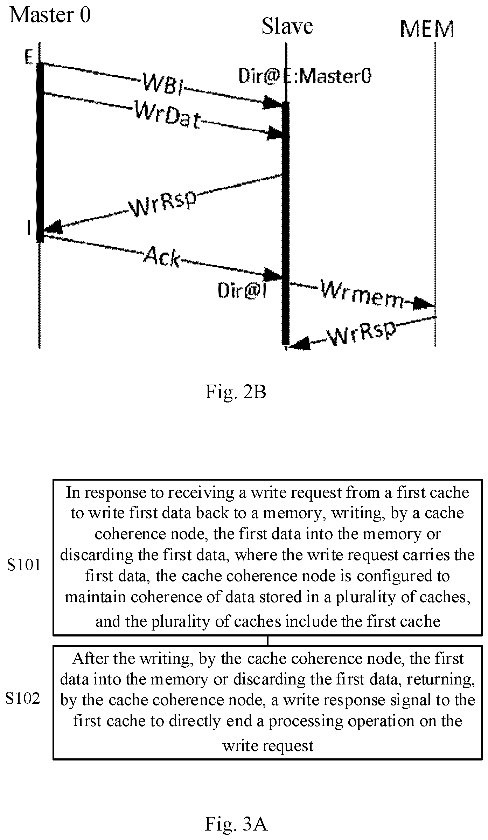

Fig. 2A shows a schematic diagram of an electronic device performing data read. Fig. 2B shows a schematic diagram of an electronic device performing data writeback.

For example, in Fig. 2A, a master 0 (or referred to as master device 0) may correspond to any one of the caches 1 to n in Fig. 1; a slave (or referred to as slave device) may correspond to any one of the cache coherence nodes 1 to n in Fig. 1; and MEM may correspond to any one of the memories 1 to n in Fig. 1. For example, as shown in Fig. 2A, when the master 0 initiates an exclusive request RdE (referring to Table 2 below) to the slave to acquire exclusive data, because the system (e.g., the electronic system) may have a plurality of masters, the slave needs to manage data coherence between the plurality of masters. For example, the slave side in the system may adopt a directory-based cache coherence protocol, in which the directory records which master caches the data and a current state of the data in the corresponding master.

For example, as shown in Fig. 2A, when the slave receives the exclusive request RdE, and the current directory corresponding to the slave side is, for example, in an invalid state I represented by Dir@I in Fig. 2A (referring to Table 1 below, for example, the invalid state I indicates that currently there is no master caching the data (e.g., data corresponding to an address requested to access)), the slave sends a read request Rdmem to the memory and receives a data response rddat returned by the memory to the slave so as to directly read the main memory (e.g., the memory) data, returns an exclusive data response DatRspE to the master 0 as a requester (referring to Table 5 below), and sets the corresponding directory on the slave side to E:Master0 (e.g., which is represented by Dir@E:Master0 in Fig. 2A), so as to record that the master 0 has cached the data and is in an exclusive state (E: Exclusive); and after receiving the exclusive data response DatRspE, the master 0 sends a message ACK to the slave to end the read request.

The master usually caches more data; and there may be an overflow scenario in the master, requiring overflow data to be written back to the slave from the master. For example, as shown in Fig. 2B, when the cached data of the master 0 overflows, the master 0 initiates a writeback request to the slave (it is illustrated only by taking WBI as an example in Fig. 2B, but it is not limited to the writeback request), and together sends the data to be written back to the memory to the slave, for example, through a signal WrDat; after acknowledging receipt of the written back data, the slave side sends a write response WrRsp to the master 0; and upon receiving the write response WrRsp, the master 0 sends a message (or a write response) ACK to the slave. For example, as shown in Fig. 2B, after the slave receives the message ACK sent by the master 0, a directory state corresponding to the slave side is set from Dir@E:Master0 to Dir@I. For example, after receiving the message ACK, the slave side sends a write request Wrmem to the memory to write the to-be-written-back data back to the memory, and receives a data write response WrRsp returned by the memory to the slave, to end the writeback request.

In the existing cache coherence protocol, read and write transactions need to carry an ACK message; the ACK message will prolong a lifecycle of a transaction in the slave, that is, occupy a slave buffer (e.g., the cache or other storage region that may be used for implementing directories) for a longer time, reduce a turnover rate of the slave buffer and waste resources; moreover, ACK message transmission requires some power consumption.

At least one embodiment of the present disclosure provides a data processing method. For example, the data processing method provided by the present disclosure includes: in response to receiving a write request from a first cache to write first data back to a memory, writing, by a cache coherence node, the first data into the memory or discarding the first data, where the write request carries the first data, the cache coherence node is configured to maintain coherence of data stored in a plurality of caches, and the plurality of caches include the first cache; and after the writing, by the cache coherence node, the first data into the memory or discarding the first data, returning, by the cache coherence node, a write response signal to the first cache to directly end a processing operation on the write request.

In the data processing method according to the above-mentioned embodiments of the present disclosure, scenario recognition is performed by comparing a writeback transaction and a directory; after receiving the write response, the master directly ends processing of the write transaction without sending an ACK message to the slave again, thereby reducing the number of ACK messages, reducing demand of the protocol for ACK messages, reducing power consumption, latency and bandwidth occupation caused by ACK message transmission, and optimizing the turnover rate of the master side buffer, so that under the same performance, the master side requires a smaller number of buffers, which saves area and power consumption.

At least some embodiments of the present disclosure further provide an electronic device, and the electronic device includes a plurality of caches and cache coherence nodes. The plurality of caches include a first cache; the cache coherence node is configured to: in response to receiving a write request from a first cache to write first data back to a memory, write the first data into the memory or discard the first data; and return a write response signal to the first cache to directly end a processing operation on the write request after the cache coherence node writes the first data into the memory or discards the first data, where the write request carries the first data, and the cache coherence node is configured to maintain coherence of data stored in the plurality of caches.

The technical effects of the electronic device according to the above-mentioned embodiment of the present disclosure is the same as the technical effects of the above-mentioned data processing method, and no details will be repeated here.

In the above-mentioned embodiments, the first cache may be any cache among the plurality of caches; and the first data may be, for example, data corresponding to any accessed address, that is, the "first" (as well as "second", etc.) here is only used for identifying the cache or the data serving as an object of description, rather than referring to a specific cache or piece of data.

Hereinafter, the respective embodiments of the present disclosure will be illustrated in conjunction with specific examples.

Fig. 3A shows a schematic flowchart of a data processing method provided by at least one embodiment of the present disclosure. As shown in Fig. 3A, in some embodiments of the present disclosure, the data processing method includes step S101 to step 102 below.

Step S101: in response to receiving a write request from a first cache to write first data back to a memory, writing, by a cache coherence node, the first data into the memory or discarding the first data, where the write request carries the first data, the cache coherence node is configured to maintain coherence of data stored in a plurality of caches, and the plurality of caches include the first cache.

Step 102: after the writing, by the cache coherence node, the first data into the memory or discarding the first data, returning, by the cache coherence node, a write response signal to the first cache to directly end a processing operation on the write request.

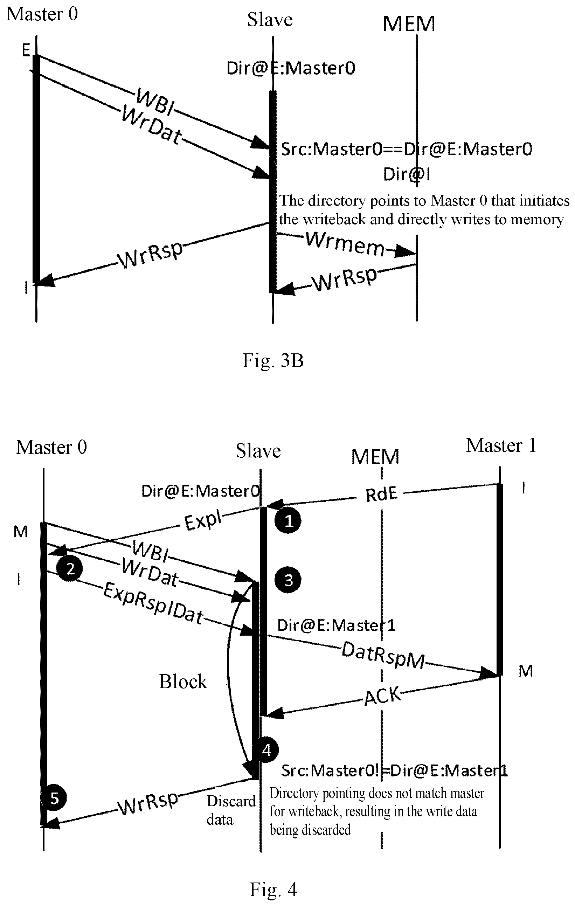

Fig. 3B shows a schematic diagram of an electronic device provided by at least one embodiment of the present disclosure performing data writeback. For example, as shown in Fig. 3B, in response to receiving a write request from the first cache (or the "master 0") to write the first data back to the memory, the cache coherence node (or the "slave") writes the first data into the memory MEM. For example, the write request carries the first data; the cache coherence node is configured to maintain coherence of data stored in the plurality of caches; and the plurality of caches include the first cache. For example, after the cache coherence node writes the first data into the memory MEM, the cache coherence node returns a write response signal WrRsp to the first cache to directly end the processing operation on the write request.

Fig. 4 shows a schematic diagram of a read/write operation of an electronic device provided by at least one embodiment of the present disclosure when there is a read/write conflict. As shown in Fig. 4, in response to receiving the write request from the first cache (or the "master 0") to write the first data back to the memory, the cache coherence node (or the "slave") discards the first data. The write request carries the first data; the cache coherence node is configured to maintain coherence of data stored in the plurality of caches; and the plurality of caches include the first cache. After the cache coherence node discards the first data, the cache coherence node returns the write response signal WrRsp to the first cache to directly end the processing operation on the write request.

It should be noted that although the specific first cache (e.g., the master 0), a second cache (e.g., a master 1), the cache coherence node (e.g., the slave), and the memory (e.g., the MEM) and related specific operations thereof are shown in, for example, Fig. 3B and Fig. 4, in the present disclosure, the content shown in the diagrams is only exemplary for convenience of illustrating the embodiments of the present disclosure.

Hereinafter, some stipulations of the cache coherence protocol according to the embodiments of the present disclosure will be exemplarily described in conjunction with Tables 1 to 9.

For example, the protocol according to the embodiments of the present disclosure stipulates that the master (or the cache) has a variety of states, as shown in Table 1:

**Table 1**

| Cache state | Illustration | Is main memory data valid? | Possible state of other cache |
|---|---|---|---|
| M | Exclusively holding the data and having modified the data | NO | I |
| E | Exclusively holding the data and having not modified the data | Yes | I |
| S | Sharing the data with other cache | Yes | S |
| I | Having not cached the data | Yes | M/E/S/I |

For example, in Table 1, the cache state may be the state of the first cache; and the main memory may be the memory MEM. For example, the first cache may include an M state, an E state, an S state and an I state. The M state indicates that the first cache exclusively holds the corresponding data and the data has been modified; the E state indicates that the first cache exclusively holds the corresponding data and the data has not been modified; the S state indicates that the first cache shares corresponding data with other masters; and the I state indicates that the first cache has not cached the corresponding data. For example, when the first cache is in the M state, because the first cache has already modified the corresponding data, the corresponding data in the memory MEM is invalid, and at this time, all other caches are all in the I state of having not cached the modified data; when the first cache is in the E state, all other caches are all in the I state of having not cached the data; when the first cache is in the S state, there are other caches in the S state of sharing the data; and when the first cache is in the I state, other caches may be in any of the M state, the E state, the S state, or the I state.

It should be noted that in the embodiments of the present disclosure, the state of the master (e.g., the first cache) is not limited to the four states listed above; and the master may have other different states according to different needs.

For example, Table 2 shows request types that the master may initiate, as well as corresponding cache state conversions and slave response messages as stipulated by the protocol according to the present disclosure. Table 2 is shown below:

**Table 2**

| Request type | Cache state allowed when initiating request | Cache state when ending request | Response returned from slave to master | Illustration |
|---|---|---|---|---|
| RdE | I/S/E | M/E | DatRspM/ DatRspE | Acquiring an exclusive data copy |
| RdD | I | M/E/S | DatRspM/ DatRspE/ DatRspS | Acquiring a data copy in a non-I state, that is, requiring caching of the data copy |
| RdS | I | S | DatRspS | Acquiring a shared data copy |
| RdI | I | I | DatRspI | Acquiring a data snapshot without caching the data copy |
| RdEE | I/S | E | RspE | Acquiring data exclusive permission without acquiring the data |
| WBI | M | I | WrRsp | Writing the cached data copy back to the main memory, and setting the cache to the invalid I state |
| WBS | M | I/S | WrRsp | Writing the cached data copy back to the main memory, and setting the cache to the shared S state |
| WBE | M | I/S/E | WrRsp | Writing the cached data copy back to the main memory, and setting the cache to the exclusive Estate |

Hereinafter, it is illustrated by taking the master as the first cache.

For example, in Table 2, the request type may be the type of a request initiated by the first cache to the slave. For example, a read request type that the first cache may initiate may include RdE (acquiring an exclusive data copy), RdD (acquiring a data copy in a non-I state, i.e., requiring caching of the data copy), RdS (acquiring a shared data copy), RdI (acquiring a data snapshot without caching the data copy), and RdEE (acquiring data exclusive permission without acquiring the data). The embodiments of the present disclosure are not limited thereto, and the first cache may also initiate other different read request types as needed.

For example, in response to the read request type initiated by the first cache to the slave being RdE, the cache state (or the cached data state) of the first cache when initiating the request may be the I state, the S state, or the E state; and when the RdE request is ended, the cache state of the first cache may be the E state (in this case, the slave returns a response DatRspE (referring to Table 6 below) to the first cache, causing the slave to acquire a data copy in the exclusive state), or the M state (in this case, the slave returns a response DatRspM (referring to Table 6 below), causing the slave to acquire a data copy in the modified state). For example, in response to the read request type initiated by the first cache to the slave being RdD, the cache state of the first cache when initiating the request may be the I state; and when the RdD request is ended, the cache state of the first cache may be the S state (in this case, the slave returns a response DatRspS (referring to Table 6 below) to the first cache, causing the slave to acquire a data copy in the shared state), the E state (in this case, the slave returns a response DatRspE to the first cache), or the M state (in this case, the slave returns a response DatRspM to the first cache). For example, in response to the read request type initiated by the first cache to the slave being RdS, the cache state of the first cache when initiating the request may be the I state; and when the RdS request is ended, the cache state of the first cache may be the S state (in this case, the slave returns a response DatRspS to the first cache). For example, in response to the read request type initiated by the first cache to the slave being RdI, the cache state of the first cache when initiating the request may be the I state; and when the RdI request is ended, the cache state of the first cache may be the I state (in this case, the slave returns a response DatRspI (referring to Table 6 below) to the first cache, causing the slave to acquire a data copy). For example, in response to the read request type initiated by the first cache to the slave being RdEE, the cache state of the first cache when initiating the request may be either the I state or the S state; and when the RdEE request is ended, the cache state of the first cache may be the E state (in this case, the slave returns a response RspE (referring to Table 6 below), causing the slave to acquire an exclusive permission).

For example, in Table 2, the write request type that the first cache may initiate may include WBI (writing the cached data copy back to the main memory, and setting the cache to the invalid I state), WBS (writing the cached data copy back to the main memory, and setting the cache to the shared S state), and WBE (writing the cached data copy back to the main memory, and setting the cache to the exclusive E state). The embodiments of the present disclosure are not limited thereto, and the first cache may also initiate other different write request types as needed.

For example, in response to the write request type initiated by the first cache to the slave being WBI, the cache state of the first cache when initiating the request may be the M state; and when the write request WBI is ended, the cache state of the first cache may be the I state (in this case, the slave returns a response WrRsp to the first cache). For example, in response to the write request type initiated by the first cache to the slave being WBS, the cache state of the first cache when initiating the request may be the M state; and when the write request WBS is ended, the cache state of the first cache may be either the I state (in this case, the slave returns the response WrRsp to the first cache) or the S state (in this case, the slave returns a response WrRsp to the first cache). For example, in response to the write request type initiated by the first cache to the slave being WBE, the cache state of the first cache when initiating the request may be the M state; and when the write request WBE is ended, the cache state of the first cache may be the I state (in this case, the slave returns the response WrRsp to the first cache), the S state (in this case, the slave returns the response WrRsp to the first cache), or the E state (in this case, the slave returns the response WrRsp to the first cache).

For example, in Fig. 3B and Fig. 4, the first cache write request is not limited to WBI; and the write request may also be WBS or WBE shown in Table 2. For example, when the cached data of the first cache overflows, the first cache may initiate the write request WBI to the slave; and in response to receiving the write request WBI from the first cache to write the first data back to the memory MEM, the cache coherence node writes the first data into the memory MEM (as shown in Fig. 3B) or discards the first data (as shown in Fig. 4). For example, after the cache coherence node writes the first data into the memory MEM or discards the first data, the cache coherence node returns a write response signal WrRsp to the first cache to directly end the processing operation on the write request. For example, when the cached data of the first cache overflows, the first cache may initiate the write request WBS to the slave; and in response to receiving the write request WBS from the first cache to write the first data back to the memory MEM, the cache coherence node writes the first data into the memory MEM (as shown in Fig. 3B) or discards the first data (as shown in Fig. 4). For example, after the cache coherence node writes the first data into the memory MEM or discards the first data, the cache coherence node returns the write response signal WrRsp to the first cache to directly end the processing operation on the write request. For example, when the cached data of the first cache overflows, the first cache may initiate the write request WBE to the slave; and in response to receiving the write request WBE from the first cache to write the first data back to the memory MEM, the cache coherence node writes the first data into the memory MEM (as shown in Fig. 3B) or discards the first data (as shown in Fig. 4). For example, after the cache coherence node writes the first data into the memory MEM or discards the first data, the cache coherence node returns a write response signal WrRsp to the first cache to directly end the processing operation on the write request.

For example, in response to receiving the write request from the first cache to write the first data back to the memory MEM, the cache coherence node determines whether the first cache is the same as the cache currently exclusively holding the first data as recorded on the cache coherence node side (or referred to as the side of the cache coherence node); and in response to determining that the first cache is the same as the cache currently exclusively holding the first data as recorded on the cache coherence node side, the cache coherence node writes the first data into the memory MEM.

For example, as shown in Fig. 3B, in response to receiving a write request from the master 0 to write the first data back to the memory MEM, the slave determines whether the master 0 is the same as the cache currently exclusively holding the first data as recorded on the slave side. For example, as shown in Fig. 3B, in response to determining that the master 0 is the same as the cache currently exclusively holding the first data as recorded on the slave side (e.g., Src:Master0==Dir@E:Master0 as recorded on the slave side), the slave writes the first data back to the memory MEM through a write memory operation Wrmem; and after receiving the write memory operation Wrmem, the memory MEM returns a write response WrRsp to the cache coherence node to indicate the slave that the memory MEM has successfully received the first data. For example, in response to determining that the master 0 is not the same as the cache currently exclusively holding the first data as recorded on the slave side (e.g., Src:Master0!=Dir@E:Master0 as recorded on the slave side), it is determined that the slave does not have permission to write the first data into the memory MEM, and the slave does not perform the operation of writing the first data into the memory MEM.

For example, after the cache coherence node writes the first data into the memory, the memory returns a write response to the cache coherence node indicating that the first data has been written into the memory; and in response to receiving the write response from the memory indicating that the first data has been written into the memory, the cache coherence node returns the write response signal to the first cache indicating that the first data has been written back to the memory to directly end the processing operation on the write request.

For example, as shown in Fig. 3B, after the slave writes the first data into the memory MEM, the memory MEM returns a write response WrRsp to the slave indicating that the first data has been written into the memory MEM; and in response to receiving the write response WrRsp from the memory MEM indicating that the first data has been written into the memory MEM, the slave returns the write response signal WrRsp to the master 0 indicating that the first data has been written back to the memory MEM to directly end the processing operation on the write request. For example, in this case, the master 0 may directly end the processing operation on the write request without sending a message to the slave again.

For example, after the cache coherence node writes the first data into the memory, the cache coherence node sets the data state of the first cache to the invalid state, the shared state, or the exclusive state. For example, the invalid state indicates that the first cache does not cache the first data; the shared state indicates that the first cache and other cache both cache the first data; and the exclusive state indicates that only the first cache caches the first data.

For example, after the slave writes the first data back to the memory MEM, the slave sets the data state of the first cache (e.g., the master 0) among the plurality of caches to the invalid state (e.g., the I state), the shared state (e.g., the S state), or the exclusive state (e.g., the E state). For example, the invalid state indicates that the first cache does not cache the first data; the shared state indicates that the first cache and other cache both cache the first data; and the exclusive state indicates that only the first cache caches the first data.

For example, as shown in Table 2 above, if the first cache initiates the write request WBI to the slave, then when the write request WBI is ended, the cache state of the first cache may be the I state. For example, if the first cache initiates the write request WBS to the slave, then when the write request WBS is ended, the cache state of the first cache may be the I state (e.g., after the first cache writes the data back to the memory MEM, the data cached in the first cache is replaced by other data) or the S state (e.g., after the first cache writes the data back to the memory MEM, the data cached in the first cache is not replaced by other data). For example, if the first cache initiates the write request WBE to the slave, then when the write request WBE is ended, the cache state of the first cache may be the I state (e.g., after the first cache writes the data back to the memory MEM, the data cached in the first cache is replaced by other data), the S state (e.g., the data written back to the memory MEM by the first cache is shared by other cache), or the E state (e.g., the data written back to the memory MEM by the first cache is not shared by other cache, and after the first cache writes the data back to the memory MEM, the data cached in the first cache is not replaced by other data).

For example, as shown in Fig. 4, in response to receiving a read request from the second cache (or the "master 1") for the first data and the cache coherence node side (e.g., the directory corresponding to the slave) recording that the first data is in the exclusive state or the shared state in the first cache (or the "master 0"), the cache coherence node initiates a monitor signal (e.g., ExpI) to the first cache; and in response to receiving the monitor signal after the first cache initiates the write request, the first cache returns a monitor response (e.g., ExpRspIDat) carrying the first data to the cache coherence node in response to the monitor signal.

For example, Table 3 shows monitor signal types and illustrations thereof as stipulated in the protocol according to the present disclosure, where the monitor signal Exp* is used for monitoring the cache state and the data at the master, and setting the monitored master to a corresponding state. Table 3 is shown below:

**Table 3**

| Monitor signal type | Illustration |
|---|---|
| ExpI | Monitoring a target cache, acquiring the latest data copy, and setting the target cached data to the invalid state. |
| ExpS | Monitoring the target cache, acquiring the latest data copy, and setting the target cached data to the invalid state or the shared state. |
| ExpE | Monitoring the target cache, and acquiring the latest data copy, without changing the target cached data state. |

Table 4 shows the monitor response types, that is, the monitor responses that the master may return to the slave when monitored by the monitor signal Exp*, as stipulated in the protocol according to the present disclosure. Table 4 is shown below:

**Table 4**

| Monitor response type | Illustration |
|---|---|
| ExpRspI | There being no data monitor response and the monitored cache being set to the I state. |
| ExpRspS | There being no data monitor response and the monitored cache being set to the S state |
| ExpRspE | There being no data monitor response and the monitored cache being set to the E/M state. |
| ExpRspIDat | There being a data monitor response and the monitored cache being set to the I state. |
| ExpRspSDat | There being a data monitor response and the monitored cache being set to the S state. |
| ExpRspEDat | There being a data monitor response and the monitored cache being set to the E/M state. |

Table 5 shows non-monitor response transaction types and illustrations thereof as stipulated in the protocol according to the present disclosure. Table 5 is shown below:

**Table 5**

| Response type | Illustration |
|---|---|
| RspE | a response of causing the master to acquire exclusive permission |
| DatRspI | a response of causing the slave to acquire a data copy |
| DatRspS | a response of causing the slave to acquire a data copy in the shared state |
| DatRspE | a response of causing the slave to acquire a data copy in the exclusive state |
| DatRspM | a response of causing the slave to acquire a data copy in the modified state |
| WrRsp | write response |
| ACK | read acknowledgement |

Table 6 shows a state conversion table and monitor response actions of monitor transactions on the master side as stipulated in the protocol according to the present disclosure, which defines a target state that the master side cache may convert to after being monitored, and corresponding monitor response messages sent thereby. Table 6 is shown below:

**Table 6**

| Monitor signal | Current cache state | Cache state after processing monitor signal | Monitor response |
|---|---|---|---|
| ExpI | I/S/E/M | I | ExpRspI/ExpRspIDat |
| ExpS | I | I | ExpRspI |
| | S | S | ExpRspS |
| | E/M | S | ExpRspS/ExpRspSDat |
| ExpE | I | I | ExpRspI |
| | S | S | ExpRspS |
| | E/M | E/M | ExpRspE/ExpRspEDat |

For example, as shown in Table 6, after the first cache receives the monitor signal ExpI, if the current cache state of the first cache is I, S, E, or M, then the state of the first cache after processing the monitor signal is I, and the first cache returns the monitor response ExpRspI (e.g., in response to the current state of the first cache being I) or ExpRspIDat (e.g., in response to the current state of the first cache being S, E, or M) to the cache coherence node.

For example, after the first cache receives the monitor signal ExpS, if the current cache state of the first cache is I, then the state of the first cache after processing the monitor signal is I, and the first cache returns the monitor response ExpRspI to the cache coherence node; after the first cache receives the monitor signal ExpS, if the current cache state of the first cache is S, then the state of the first cache after processing the monitor signal is S, and the first cache returns the monitor response ExpRspS to the cache coherence node; after the first cache receives the monitor signal ExpS, if the current cache state of the first cache is E or M, then the state of the first cache after processing the monitor signal is S, and the first cache returns the monitor response ExpRspS (e.g. when the first cache executes the write request WBS or WBE) or ExpRspSDat (e.g. when the first cache executes the write request WBI) to the cache coherence node.

For example, after the first cache receives the monitor signal ExpE, if the current cache state of the first cache is I, then the state of the first cache after processing the monitor signal is I, and the first cache returns the monitor response ExpRspI to the cache coherence node; after the first cache receives the monitor signal ExpE, if the current cache state of the first cache is S, then the state of the first cache after processing the monitor signal is S, and the first cache returns the monitor response ExpRspS to the cache coherence node; after the first cache receives the monitor signal ExpE, if the current cache state of the first cache is E or M, then the state of the first cache after processing the monitor signal is E or M, and the first cache returns the monitor response ExpRspE (e.g. when the first cache executes the write request WBS or WBE) or ExpRspEDat (e.g. when the first cache executes the write request WBI) to the cache coherence node.

Table 7 shows cases where a monitor transaction is processed on the master side and there is a conflict as stipulated in the protocol according to the present disclosure; that is, when the monitor transaction reaches the master, the master currently already initiates a read transaction (or a read request) Rd* or a write transaction (or a write request) WB* to cache lines with the same address. Table 7 is shown below:

**Table 7**

| Monitor signal type | Current cache state | Cache state after processing monitor command | Conflict request type | Monitor response |
|---|---|---|---|---|
| ExpI | I/S/E | I | Rd* | ExpRspI/ ExpRspIDat |
| | M | I | WB* | ExpRsplDat |
| ExpS | I/S/E | I | Rd* | ExpRspI/ ExpRspIDat |
| | M | I | WB* | ExpRspIDat |
| ExpE | I/S/E | I | Rd* | ExpRspI/ ExpRspIDat |
| | M | I | WB* | ExpRspIDat |

For example, as shown in Table 7, in the case where the monitor signal sent by the cache coherence node to the first cache is ExpI, when the monitor transaction reaches the first cache, the first cache already initiates a read transaction Rd* to cache lines with the same address, if the current state of the first cache is I, S, or E, then the state of the first cache after processing the monitor signal is I, and the first cache returns the monitor response ExpRspI (e.g., in response to the state of the master being I) or ExpRspIDat (e.g., in response to the state of the first cache being S or E) to the cache coherence node; and in the case where the monitor signal sent by the cache coherence node to the first cache is ExpI, when the monitor transaction reaches the first cache, the first cache already initiates a write transaction WB* to cache lines with the same address, if the current state of the first cache is M, then the first cache returns the monitor response ExpRsplDat to the cache coherence node, and the state of the first cache after processing the monitor signal is I.

For example, as shown in Table 7, in the case where the monitor signal sent by the cache coherence node to the first cache is ExpS, when the monitor transaction reaches the first cache, the first cache already initiates a read transaction Rd* to cache lines with the same address, if the current state of the first cache is I, S, or E, then the state of the first cache after processing the monitor signal is I, and the first cache returns the monitor response ExpRspI (e.g., in response to the state of the first cache being I) or ExpRspIDat (e.g., in response to the state of the first cache being S or E) to the cache coherence node; and in the case where the monitor signal sent by the cache coherence node to the first cache is ExpS, when the monitor transaction reaches the first cache, the first cache already initiates a write transaction WB* to cache lines with the same address, if the current state of the first cache is M, the first cache returns the monitor response ExpRsplDat to the cache coherence node, and the state of the first cache after processing the monitor signal ExpS is I.

For example, as shown in Table 7, in the case where the monitor signal sent by the cache coherence node to the first cache is ExpE, when the monitor transaction reaches the first cache, the first cache already initiates a read transaction Rd* to cache lines with the same address, if the current state of the first cache is I, S, or E, then the state of the first cache after processing the monitor signal is I, and the first cache returns the monitor response ExpRspI (e.g., in response to the state of the first cache being I) or ExpRspIDat (e.g., in response to the state of the first cache being S or E) to the cache coherence node; and in the case where the monitor signal sent by the cache coherence node to the first cache is ExpE, when the monitor transaction reaches the first cache, the first cache already initiates a write transaction WB* to cache lines with the same address, if the current state of the first cache is M, the first cache returns the monitor response ExpRsplDat to the cache coherence node, and the state of the first cache after processing the monitor signal ExpE is I.

Table 8 shows state conversions (including triggering a monitor command, returning a response command to the master, or performing read/write processing on memory data) that the slave may need to perform according to the directory state after receiving the read/write request from the master, as stipulated in the protocol according to the present disclosure. Table 8 is shown below:

**Table 8**

| Request type | Directory state | Triggered monitor signal | Triggered response signal | Memory data |
|---|---|---|---|---|
| RdE | I | | | Read memory data |
| | S/E | ExpI | | |
| RdD | I/S | | | Read memory data |
| | E | ExpS | | |
| RdS | I/S | | | Read memory data |
| | E | ExpS | | |
| RdI | I/S | | | Read memory data |
| | E | ExpS | | |
| RdEE | I | | RspE | |
| | S/E | ExpE | | |
| WBI | I/S/E | | WrRsp | If the data is exclusive and points to the Master that initiates WBI, then write the data into the memory; otherwise, discard the data |
| WBS | I/S/E | | WrRsp | |
| WBE | I/S/E | | WrRsp | |

For example, as shown in Table 8, in response to receiving a read request from the second cache for the first data as RdE and the first data being in the I state in the directory corresponding to the cache coherence node, the cache coherence node directly reads the first data from the memory and returns the first data to the second cache. For example, in response to receiving the read request RdE from the second cache for the first data and the cache coherence node side (e.g., the directory corresponding to the slave) recording that the first data is in the S state or in the exclusive state E in the directory corresponding to the cache coherence node, the cache coherence node initiates a monitor signal ExpI (monitoring the target cache, acquiring the latest data copy, and setting the cached data thereof to the invalid state) to the first cache.

For example, in response to receiving the monitor response, the cache coherence node returns the first data to the second cache; and after receiving the first data, the second cache returns a message to the cache coherence node indicating that the first data has been received to end the read request. For example, as shown in Fig. 4, in response to receiving the monitor response ExpRspIDat, the slave returns the first data to the master 1 (e.g., through the response signal DatRspM) in response to the monitor response ExpRspIDat, and sets the data state of the master 1 on the slave side to the exclusive state (e.g., Dir@E:Master1 as recorded on the slave side); and the exclusive state (or Dir@E:Master1) indicates that only the master 1 caches the first data. For example, after receiving the first data, the master 1 returns a message ACK to the slave indicating that the first data has been received to end the read request RdE.

For example, after receiving the message, the cache coherence node discards the first data written onto the cache coherence node side by the write request, and returns a write response signal to the first cache to directly end the processing operation on the write request. For example, as shown in Fig. 4, after the slave receives the message ACK from the master 1, the read request RdE previously initiated by the master 1 is processed, and the write request WB* previously initiated by the master 0 in a blocked state (in the blocked state after the slave processes the read request initiated by the master 1 (i.e., because the slave may only process one transaction at the same moment for transactions with the same address, the write request WB* initiated by the master 0 before the RdE of the master 1 is processed is always in the blocked state)) on the slave side is awakened and continues to be processed; at this time, because the slave side records the exclusive state that the master 1 already acquires the first data, and the write request is initiated by the master 0, the data in the write transaction of the master 0 is already expired invalid data; so the slave determines that the write transaction or the write operation should be invalid data due to a conflict (as shown in Fig. 4, Src:Master0!=Dir@E:Master1, that is, the master 0 requesting writeback is not the master 1 exclusively holding the first data to which the slave points), and directly discards the data already written by the master 0 to the slave. For example, if the slave determines that the first data written into the slave side by the write request is invalid data, the slave discards the first data written into the slave side by the write request, and returns a write response signal WrRsp to the master 0 to directly end the processing operation on the write request. For example, after receiving the write response signal WrRsp, the slave directly ends processing of the corresponding write transaction, and there is no need to send a message ACK to the slave again.

For example, in response to receiving a read request from the second cache for the first data as RdD, RdS, or RdI, and the first data being in the I state or the S state in the directory corresponding to the cache coherence node, the cache coherence node may directly read the first data from the memory, and return the first data to the second cache. For example, in response to receiving the read request RdD, RdS, or RdI from the second cache for the first data, and the cache coherence node side (e.g., the directory corresponding to the slave) recording that the first data is in the exclusive state E in the directory corresponding to the cache coherence node, the cache coherence node initiates a monitor signal ExpS (monitoring the target cache, acquiring the latest data copy, and setting the cached data thereof to the invalid state or the shared state) to the first cache.

For example, in response to receiving the monitor response, the cache coherence node returns the first data to the second cache; and after receiving the first data, the second cache returns a message to the cache coherence node indicating that the first data has been received to end the read request. For example, as shown in Fig. 4, in response to receiving the monitor response ExpRspIDat, the slave returns the first data to the master 1 (e.g., through the response signal DatRspM) in response to the monitor response ExpRspIDat, and sets the data state of the master 1 on the slave side to the exclusive state (e.g., Dir@E:Master1 as recorded on the slave side); and the exclusive state (or Dir@E:Master1) indicates that only the master 1 caches the first data. For example, after receiving the first data, the master 1 returns a message ACK to the slave indicating that the first data has been received to end the read request (e.g. RdD or RdS).

For example, after receiving the message, the cache coherence node discards the first data written into the cache coherence node side by the write request, and returns a write response signal to the first cache to directly end the processing operation on the write request. For example, as shown in Fig. 4, after the slave receives the message ACK from the master 1, the read request RdD, RdS, or RdI previously initiated by the master is processed; the write request WB* previously initiated by the master 0 in the blocked state on the slave side is awakened and continues to be processed; at this time, because the slave side records the exclusive state or the shared state that the master 1 already acquires the first data, and the write request is initiated by the master 0, the data in the write transaction of the master 0 is already expired and invalid data; so the slave determines that the write transaction or the write operation should be invalid data due to a conflict, and directly discards the data already written by the master 0 into the slave. For example, if the slave determines that the first data written into the slave side by the write request is invalid data, the slave discards the first data written into the slave side by the write request, and returns a write response signal WrRsp to the master 0 to directly end the processing operation on the write request. For example, after receiving the write response signal WrRsp, the slave directly ends processing of the corresponding write transaction, and there is no need to send the message ACK again.

For example, in response to receiving a read request from the second cache for the first data as RdEE and the first data being in the I state in the directory corresponding to the cache coherence node, the cache coherence node returns a response RspE (there being no data monitor response and the monitored cache being set to the E state or the M state) to the second cache to end the read request RdEE. For example, in response to receiving the read request RdEE from the second cache for the first data and the cache coherence node side (e.g., the directory corresponding to the slave) recording that the first data is in the S state or the exclusive state E in the directory corresponding to the cache coherence node, the cache coherence node initiates a monitor signal ExpE to the first cache (monitoring the target cache, and acquiring the latest data copy, without changing the cached data state thereof) to the first cache.

For example, in response to receiving the monitor response, the cache coherence node returns the first data to the second cache; and after receiving the first data, the second cache returns a message to the cache coherence node indicating that the first data has been received to end the read request. For example, as shown in Fig. 4, in response to receiving the monitor response ExpRspIDat, the slave returns the first data to the master 1 (e.g., through the response signal DatRspM) in response to the monitor response ExpRspIDat. For example, after receiving the first data, the master 1 returns a message ACK to the slave indicating that the first data has been received to end the read request RdEE.

For example, after receiving the message, the cache coherence node discards the first data written into the cache coherence node side by the write request, and returns a write response signal to the first cache to directly end the processing operation on the write request. For example, as shown in Fig. 4, after the slave receives the message ACK from the master 1, the read request RdEE previously initiated by the master is processed; the write request WB* previously initiated by the master 0 in the blocked state on the slave side is awakened and continues to be processed; at this time, because the slave side records that the master 0 is no longer in the state of exclusively holding the first data, and the write request is initiated by the master 0, the data in the write transaction of the master 0 is already expired and invalid data; so the slave determines that the write transaction or the write operation should be invalid data due to a conflict, and directly discards the data already written by the master 0 into the slave. For example, if the slave determines that the first data written into the slave side by the write request is invalid data, the slave discards the first data written into the slave side by the write request, and returns a write response signal WrRsp to the master 0 to directly end the processing operation on the write request. For example, after receiving the write response signal WrRsp, the slave directly ends processing of the corresponding write transaction, and there is no need to send the message ACK again.

For example, in response to receiving a write request (e.g., **WBI,** WBS, or WBE) for the data from the second cache to the cache coherence node, regardless of the current state of the directory (e.g., I, S, or E), no monitor signal will be triggered, and the cache coherence node will return a response WrRsp to the second cache. For example, at this time, if the cache coherence node side records that the data the second cache needs to write is in the exclusive state and points to the second cache initiating the write request WBI, then the data will be written into the memory; otherwise, the data will be discarded.

Table 9 is a state conversion table after the slave receives a response from the master as stipulated in the protocol according to the present disclosure. Table 9 is shown below:

**Table 9**

| Response signal sent from master to slave | Request type received by slave | Response sent from slave to master | Memory data | Request transaction table entry |
|---|---|---|---|---|
| ExpRspI | * | | Read memory data | WaitACK |
| ExpRspS | * | | Read memory data | WaitACK |
| ExpRspE | * | | Read memory data | WaitACK |
| ExpRspIDat | RdI | DatRspI | | WaitACK |
| | RdS | DatRspS | | WaitACK |
| | RdD/RdE | DatRspE/DatRspM | | WaitACK |
| ExpRspSDat | RdS/RdD | DatRspS | | WaitACK |
| ExpRspEDat | RdI | DatRspI | | WaitACK |
| ACK | Rd* | | | End |

For example, as shown in Table 9, if the first cache sends a response signal ExpRspI, ExpRspS, or ExpRspE to the cache coherence node, and the cache coherence node receives any type of read request from the second cache (e.g., the cache coherence node creates a read request transaction processing table entry, and records a state related to the current read request transaction in response to receiving a read request from the second cache), then upon receiving the response signal ExpRspI, ExpRspS, or ExpRspE sent by the first cache to the cache coherence node, the cache coherence node needs to read the memory data. For example, after the cache coherence node reads the memory data, the cache coherence node sends the data to the second cache and sets the state of the read request transaction processing table entry corresponding to the read request of the second cache to an acknowledgement waiting state (e.g. WaitACK), waiting for the second cache to send an acknowledgement signal (ACK) acknowledging that the data has been successfully received.

For example, as shown in Table 9, if the first cache sends the response signal ExpRspIDat to the cache coherence node, and a request type from the second cache received by the cache coherence node is the read request RdI (e.g., the cache coherence node creates a read request transaction processing table entry and records a state related to the current read request transaction, in response to receiving the read request RdI from the second cache), then after receiving the response signal ExpRspIDat sent by the first cache to the cache coherence node, the cache coherence node sends a response signal DatRspI carrying data to the second cache, and sets the state of the read request transaction processing table entry corresponding to the read request RdI from the second cache to the acknowledgement waiting state (e.g., WaitACK), waiting for the second cache to send an acknowledgement signal (ACK) acknowledging that the data has been successfully received.

For example, as shown in Table 9, if the first cache sends the response signal ExpRspIDat to the cache coherence node, and a request type from the second cache received by the cache coherence node is the read request RdS (e.g., the cache coherence node creates a read request transaction processing table entry and records a state related to the current read request transaction, in response to receiving the read request RdS from the second cache), then upon receiving the response signal ExpRspIDat sent by the first cache to the cache coherence node, the cache coherence node sends a response signal DatRspS carrying data to the second cache, and sets the state of the read request transaction processing table entry corresponding to the read request RdS from the second cache to the acknowledgement waiting state (e.g., WaitACK), waiting for the second cache to send an acknowledgement signal (ACK) acknowledging that the data has been successfully received.

For example, as shown in Table 9, if the first cache sends the response signal ExpRspIDat to the cache coherence node, and a request type from the second cache received by the cache coherence node is the read request RdD (e.g., the cache coherence node creates a read request transaction processing table entry, and records a state related to the current read request transaction, in response to receiving the read request RdD from the second cache), then upon receiving the response signal ExpRspIDat sent by the first cache to the cache coherence node, the cache coherence node sends a response signal DatRspE carrying data to the second cache (recording that the second cache exclusively holds the data) or DatRspM (recording that the second cache exclusively holds the modified data), and sets the state of the read request transaction processing table entry corresponding to the read request RdD of the second cache to the acknowledgement waiting state (e.g. WaitACK), waiting for the second cache to send an acknowledgement signal (ACK) acknowledging that the data has been successfully received.

For example, as shown in Table 9, if the first cache sends the response signal ExpRspIDat to the cache coherence node, and a request type from the second cache received by the cache coherence node is the read request RdE (e.g., the cache coherence node creates a read request transaction processing table entry, and records a state related to the current read request transaction, in response to receiving the read request RdE from the second cache), then upon receiving the response signal ExpRspIDat sent by the first cache to the cache coherence node, the cache coherence node sends a response signal DatRspE carrying data to the second cache (recording that the second cache exclusively holds the data) or DatRspM (recording that the second cache exclusively holds the modified data), and sets the state of the read request transaction processing table entry corresponding to the read request RdE of the second cache to the acknowledgement waiting state (e.g. WaitACK), waiting for the second cache to send an acknowledgement signal (ACK) acknowledging that the data has been successfully received.

For example, as shown in Table 9, if the first cache sends the response signal ExpRspSDat to the cache coherence node, and a request type from the second cache received by the cache coherence node is the read request RdS or RdD (e.g., the cache coherence node creates a read request transaction processing table entry, and records a state related to the current read request transaction, in response to receiving the read request RdS or RdD from the second cache), then upon receiving the response signal ExpRspSDat sent by the first cache to the cache coherence node, the cache coherence node sends a response signal DatRspS carrying data to the second cache (recording that the second cache shares the data), and sets the state of the read request transaction processing table entry corresponding to the read request RdS or RdD from the second cache to the acknowledgement waiting state (e.g. WaitACK), waiting for the second cache to send an acknowledgement signal (ACK) acknowledging that the data has been successfully received.

For example, as shown in Table 9, if the first cache sends the response signal ExpRspEDat to the cache coherence node, and a request type from the second cache received by the cache coherence node is the read request RdI (e.g., the cache coherence node creates a read request transaction processing table entry, and records a state related to the current read request transaction, in response to receiving the read request RdI from the second cache), then upon receiving the response signal ExpRspEDat sent by the first cache to the cache coherence node, the cache coherence node sends a response signal DatRspI carrying data to the second cache (recording that the second cache acquires a copy of the data), and sets the state of the read request transaction processing table entry corresponding to the read request RdI from the second cache to the acknowledgement waiting state (e.g. WaitACK), waiting for the second cache to send an acknowledgement signal (ACK) acknowledging that the data has been successfully received.

For example, as shown in Table 9, if the first cache sends the response signal ACK to the cache coherence node, and a request type from the second cache received by the cache coherence node is the read request Rd* (e.g., the cache coherence node creates a read request transaction processing table entry or a write request transaction processing table entry, and records a state related to the current read request transaction, in response to receiving the read request Rd* from the second cache), then upon receiving the response signal ACK sent by the first cache to the cache coherence node, the cache coherence node sets the state of the read request transaction processing table entry to an end state, to acknowledge that read of the data has been successfully completed.

In the data processing method according to the embodiments of the present disclosure, scenario recognition is performed by comparing a writeback transaction and a directory; after receiving the write response, the master directly ends processing of the write transaction without sending an ACK message to the slave again, thereby reducing the number of ACK messages, reducing demand of the protocol for ACK messages, reducing power consumption, latency and bandwidth occupation caused by ACK message transmission, and optimizing the turnover rate of the master side buffer, so that under the same performance, the master side requires a smaller number of buffers, which saves area and power consumption.

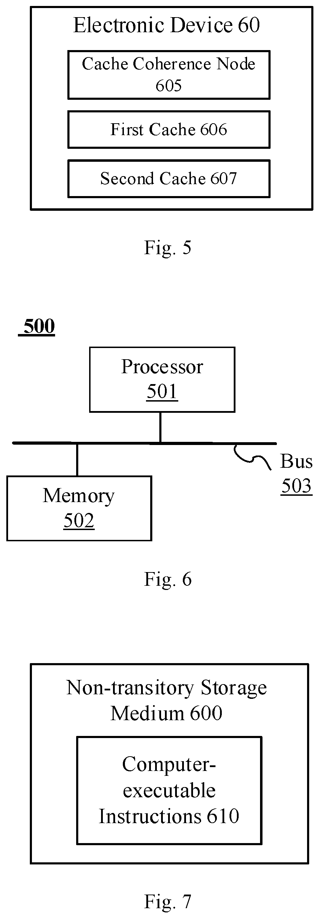

Fig. 5 shows a schematic diagram of an electronic device 60 provided by at least one embodiment of the present disclosure. For example, the electronic device 60 includes a cache coherence node 605, a first cache 606, and a second cache 607. For example, the cache coherence node 605 is configured to: in response to receiving a write request from the first cache 606 to write first data back to a memory, write the first data into the memory or discard the first data; and return a write response signal to the first cache 606 to directly end a processing operation on the write request after the cache coherence node 605 writes the first data into the memory or discards the first data. For example, the write request carries the first data; and the cache coherence node 605 is configured to maintain coherence of data stored in a plurality of caches. The cache included in the electronic device 60 according to the present disclosure is not limited to the two caches shown in Fig. 5 (the first cache 606 and the second cache 607), and the number of caches may be set to any number as needed.

For example, the cache coherence node 605 is further configured to: in response to receiving the write request from the first cache 606 to write the first data back to the memory, determine whether the first cache 606 is the same as a cache currently exclusively holding the first data as recorded on a cache coherence node 605 side; and in response to determining that the first cache 606 is the same as the cache currently exclusively holding the first data as recorded on the cache coherence node 605 side, write the first data into the memory.

For example, the memory is configured to, after the cache coherence node 605 writes the first data into the memory, return a write response to the cache coherence node 605 indicating that the first data has been written into the memory. For example, the cache coherence node 605 is further configured to, in response to receiving the write response from the memory indicating that the first data has been written into the memory, return the write response signal to the first cache 606 indicating that the first data has been written back to the memory, to directly end the processing operation on the write request.

For example, the cache coherence node 605 is further configured to, after the cache coherence node 605 writes the first data into the memory, set a data state of the first cache 606 to an invalid state, a shared state, or an exclusive state. For example, the invalid state indicates that the first cache 606 does not cache the first data; the shared state indicates that the first cache 606 and other cache both cache the first data; and the exclusive state indicates that only the first cache 606 caches the first data.

For example, the cache coherence node 605 is further configured to, in response to receiving a read request from the second cache 607 for the first data and determining that the first data is in an exclusive state or a shared state in the first cache 606 as recorded by the cache coherence node 605 side, initiate a monitor signal to the first cache 606. For example, the first cache 606 is configured to, in response to receiving the monitor signal after initiating the write request, return a monitor response carrying the first data to the cache coherence node 605.

For example, the cache coherence node 605 is further configured to, in response to receiving the monitor response, return the first data to the second cache 607. For example, the second cache 607 is further configured to, after receiving the first data, return a message to the cache coherence node 605 indicating that the first data has been received to end the read request.

For example, the cache coherence node 605 is further configured to, in response to receiving the monitor response, return the first data to the second cache 607 and set the data state of the second cache 607 to the exclusive state. For example, the exclusive state indicates that only the second cache 607 caches the first data.

For example, the cache coherence node 605 is further configured to, after receiving the message, discard the first data written into the cache coherence node 605 side by the write request; and return the write response signal to the first cache 606 to directly end the processing operation on the write request.

For example, the cache coherence node 605 is further configured to, in response to determining that the first data written into the cache coherence node 605 side by the write request is invalid data after receiving the message, discard the first data written into the cache coherence node 605 side by the write request.

**In** the electronic device 60 according to the embodiments of the present disclosure, scenario recognition is performed by comparing a writeback transaction and a directory; after receiving the write response, the master directly ends processing of the write transaction without sending an ACK message to the slave again, thereby reducing the number of ACK messages, reducing demand of the protocol for ACK messages, reducing power consumption, latency and bandwidth occupation caused by ACK message transmission, and optimizing the turnover rate of the master side buffer, so that under the same performance, the master side requires a smaller number of buffers, which saves area and power consumption.

At least some embodiments of the present disclosure further provide a data processing apparatus; and the data processing apparatus includes a memory and a processor. For example, the memory is configured to store computer-executable instructions, and the processor is configured to execute the computer-executable instructions. For example, the computer-executable instructions, when executed by the processor, implements the data processing method provided by at least one embodiment of the present disclosure.

Fig. 6 shows a schematic diagram of a data processing apparatus 500 provided by at least one embodiment of the present disclosure.

As shown in Fig. 6, the data processing apparatus 500 according to the embodiment of the present disclosure includes a processor 501 and a memory 502, and the processor 501 and the memory 502 may be interconnected through a bus 503.

The processor 501 may execute various actions and processes based on programs or code stored in the memory 502. For example, the processor 501 may be an integrated circuit chip with signal processing capability. For example, the above-mentioned processor 501 may be a general-purpose processor, a digital signal processor (DSP), an application specific integrated circuit (ASIC), a field programmable gate array (FPGA) or other programmable logic devices, discrete gate or transistor logic devices, or discrete hardware components, and the processor can implement or execute the methods, and steps disclosed in the embodiments of the present disclosure. The general-purpose processor may be a microprocessor or the processor may also be any conventional processor, etc., and may be of an X86 architecture or an ARM architecture.

The memory 502 is configured to non-transitorily store computer-executable instructions, and the processor 501 is configured to run the computer-executable instructions. When the computer-executable instructions are executed by the processor 501, the data processing method provided by at least one embodiment of the present disclosure is implemented.

The memory 502 may be a volatile memory or a non-volatile memory, or may include both the volatile memory and the non-volatile memory. The non-volatile memory may be read only memory (ROM), programmable read only memory (PROM), erasable programmable read only memory (EPROM), electrically erasable programmable read only memory (EEPROM), or flash memory. The volatile memory may be random-access memory (RAM), which acts as an external cache. By way of exemplary but not restrictive description, many forms of RAM are available, such as static random-access memory (SRAM), dynamic random-access memory (DRAM), synchronous dynamic random-access memory (SDRAM), double data rate synchronous dynamic random-access memory (DDRSDRAM), enhanced synchronous dynamic random-access memory (ESDRAM), synchronous link dynamic random-access memory (SLDRAM), and direct memory bus random-access memory (DRRAM). It should be noted that the memories described herein are intended to include, but are not limited to, these memories and any other suitable types of memories.

In the data processing apparatus 500 according to the embodiments of the present disclosure, scenario recognition is performed by comparing a writeback transaction and a directory; after receiving the write response, the master directly ends processing of the write transaction without sending an ACK message to the slave again, thereby reducing the number of ACK messages, reducing demand of the protocol for ACK messages, reducing power consumption, latency and bandwidth occupation caused by ACK message transmission, and optimizing the turnover rate of the master side buffer, so that under the same performance, the master side requires a smaller number of buffers, which saves area and power consumption.

At least one embodiment of the present disclosure further provides a non-transitory storage medium that non-transitorily stores computer-executable instructions. For example, when the computer-executable instructions are executed by a processor, the data processing method provided by at least one embodiment of the present disclosure is implemented.

Fig. 7 is a schematic diagram of a non-transitory storage medium provided by at least one embodiment of the present disclosure. As shown in Fig. 7, the non-transitory storage medium 600 can non-transitorily store computer-executable instructions 610, which, when executed by a computer, implement the data processing method provided by any embodiment of the present disclosure.

Similarly, the non-transitory storage medium in the embodiments of the present disclosure may be a volatile memory or a non-volatile memory, or may include both volatile and non-volatile memory. It should be noted that the memories described herein are intended to include, but are not limited to, these memories and any other suitable types of memories.

The technical effects of the above-mentioned non-transitory storage medium are the same as that of the above-mentioned data processing method, and will not be repeated here.

It should be noted that, the flow diagrams and block diagrams in the drawings illustrate the possible implementation architecture, functions, and operations of the system, method, and computer program product according to various embodiments of the present disclosure. **In** this regard, each block in the flow diagrams or block diagrams can represent a module, a program segment, or a part of the code, and the module, the program segment, or the part of the code includes one or more executable instructions for implementing the specified logic function. It should also be noted that, in some alternative implementations, the functions marked in the blocks may also occur in a different order from the order marked in the drawings. For example, two blocks in connection may actually be executed substantially in parallel, or they may sometimes be executed in the reverse order, which depends on the functions involved. It should also be noted that each block in the block diagrams and/or flow diagrams, and the combination of the blocks in the block diagrams and/or flow diagrams, may be implemented by a dedicated hardware-based system that performs the specified functions or operations, or may be realized by a combination of dedicated hardware and computer instructions.

Generally speaking, the various examples and embodiments of the present disclosure may be implemented in hardware or special purpose circuits, software, firmware, logic, or any combination thereof. Certain aspects may be implemented in hardware, while other aspects may be implemented in firmware or software that may be executed by a controller, microprocessor, or other computing device. When various aspects of the embodiments of the present disclosure are illustrated or described as block diagrams, flow diagrams, or described by using some other graphs, it will be understood that the blocks, devices, systems, techniques, or methods described herein may be regarded as non-limiting examples implemented in hardware, software, firmware, dedicated circuits or logic, general-purpose hardware or controllers or other computing devices, or some combinations thereof.

For the present disclosure, the following should be noted:
(1) The drawings involve only the structure(s) in connection with the embodiment(s) of the present disclosure, and other structure(s) can be referred to common design(s).
(2) For clarity, in the drawings used to describe the embodiments of the present disclosure, the thicknesses and sizes of layers or structures are enlarged. It can be understood that when an element such as a layer, film, region or substrate is referred to as being "on" or "under" another element, the element may be "directly" "on" or "under" another element, or one or more intermediate elements may be present.
(3) In case of no conflict, features in one embodiment or in different embodiments can be combined to obtain new embodiments.

What have been described above are only specific implementations of the present disclosure, the protection scope of the present disclosure is not limited thereto, and the protection scope of the present disclosure should be based on the protection scope of the claims.

## Claims

1. A data processing method, comprising:
(S101) in response to receiving a write request from a first cache to write first data back to a memory, writing, by a cache coherence node, the first data into the memory or discarding the first data, wherein the write request carries the first data, the cache coherence node is configured to maintain coherence of data stored in a plurality of caches, and the plurality of caches comprise the first cache;
(S102) after the writing, by the cache coherence node, the first data into the memory or discarding the first data, returning, by the cache coherence node, a write response signal to the first cache to directly end a processing operation on the write request;
in response to receiving a read request from a second cache for the first data and determining that the first data is in an exclusive state or a shared state in the first cache as recorded by a cache coherence node side, initiating, by the cache coherence node, a monitor signal to the first cache;
in response to receiving, by the first cache, the monitor signal after initiating the write request, returning, by the first cache, a monitor response carrying the first data to the cache coherence node in response to the monitor signal;
in response to receiving the monitor response, returning, by the cache coherence node, the first data to the second cache; and
after receiving the first data, returning, by the second cache, a message to the cache coherence node indicating that the first data has been received to end the read request;
**characterized in that**:
wherein after the writing, by the cache coherence node, the first data into the memory or discarding the first data, the returning, by the cache coherence node, the write response signal to the first cache to directly end the processing operation on the write request, comprises: after receiving the message, discarding, by the cache coherence node, the first data written into the cache coherence node side by the write request, and returning the write response signal to the first cache to directly end the processing operation on the write request.

2. The data processing method according to claim 1, wherein in response to receiving the write request from the first cache to write the first data back to the memory, the writing, by the cache coherence node, the first data into the memory or discarding the first data, comprises:
in response to receiving the write request from the first cache to write the first data back to the memory, determining, by the cache coherence node, whether the first cache is the same as a cache currently exclusively holding the first data as recorded on the cache coherence node side; and
in response to determining that the first cache is the same as the cache currently exclusively holding the first data as recorded on the cache coherence node side, writing, by the cache coherence node, the first data into the memory.

3. The data processing method according to claim 1 or 2, wherein after the writing, by the cache coherence node, the first data into the memory or discarding the first data, the returning, by the cache coherence node, the write response signal to the first cache to directly end the processing operation on the write request, comprises:
after the writing, by the cache coherence node, the first data into the memory, returning, by the memory, a write response to the cache coherence node indicating that the first data has been written into the memory; and
in response to receiving the write response from the memory indicating that the first data has been written into the memory, returning, by the cache coherence node, the write response signal to the first cache indicating that the first data has been written back to the memory, to directly end the processing operation on the write request.

4. The data processing method according to any one of claims 1 to 3, further comprising:
after the writing, by the cache coherence node, the first data into the memory, setting, by the cache coherence node, a data state of the first cache to an invalid state, the shared state, or the exclusive state,
wherein the invalid state indicates that the first cache does not cache the first data, the shared state indicates that the first cache and other cache both cache the first data, and the exclusive state indicates that only the first cache caches the first data.

5. The data processing method according to claim 1, wherein in response to receiving the monitor response, the returning, by the cache coherence node, the first data to the second cache, comprises:
in response to receiving the monitor response, returning, by the cache coherence node, the first data to the second cache, and setting a data state of the second cache to the exclusive state, wherein the exclusive state indicates that only the second cache caches the first data.

6. The data processing method according to claim 1, wherein after receiving the message, the discarding, by the cache coherence node, the first data written into the cache coherence node side by the write request, comprises:
in response to determining that the first data written into the cache coherence node side by the write request is invalid data after receiving the message, discarding, by the cache coherence node, the first data written into the cache coherence node side by the write request.

7. An electronic device (60), comprising:
a plurality of caches, comprising a first cache (606) and a second cache (607); and
a cache coherence node (605), configured to:
in response to receiving a write request from a first cache (606) to write first data back to a memory, write the first data into the memory or discard the first data; wherein the write request carries the first data, and the cache coherence node (605) is configured to maintain coherence of data stored in the plurality of caches;
return a write response signal to the first cache (606) to directly end a processing operation on the write request after the cache coherence node (605) writes the first data into the memory or discards the first data;
in response to receiving a read request from the second cache (607) for the first data and determining that the first data is in an exclusive state or a shared state in the first cache (606) as recorded by a cache coherence node side, initiate a monitor signal to the first cache (606);
wherein the first cache (606) is configured to, in response to receiving the monitor signal after initiating the write request, return a monitor response carrying the first data to the cache coherence node (605) in response to the monitor signal;
the cache coherence node (605) is further configured to, in response to receiving the monitor response, return the first data to the second cache (607);
the second cache (607) is configured to, after receiving the first data, return a message to the cache coherence node (605) indicating that the first data has been received to end the read request;
**characterized in that**:
the cache coherence node (605) is configured to, after receiving the message, discard the first data written into the cache coherence node side by the write request, and return the write response signal to the first cache (606) to directly end the processing operation on the write request.

8. The electronic device (60) according to claim 7, wherein the cache coherence node (605) is further configured to:
in response to receiving the write request from the first cache (606) to write the first data back to the memory, determine whether the first cache (606) is the same as a cache currently exclusively holding the first data as recorded on a cache coherence node side; and
in response to determining that the first cache (606) is the same as the cache currently exclusively holding the first data as recorded on the cache coherence node side, write the first data into the memory.

9. The electronic device (60) according to claim 7 or 8, wherein the memory is configured to, after the cache coherence node (605) writes the first data into the memory, return a write response to the cache coherence node (605) indicating that the first data has been written into the memory; and
the cache coherence node (605) is further configured to, in response to receiving the write response from the memory indicating that the first data has been written into the memory, return the write response signal to the first cache (606) indicating that the first data has been written back to the memory, to directly end the processing operation on the write request.

10. A data processing apparatus (500), comprising:
a memory (502), configured to store computer-executable instructions; and
a processor (501), configured to execute the computer-executable instructions, wherein the computer-executable instructions, when executed by the processor (501), implement the method according to any one of claims 1 to 6.

11. A non-transitory storage medium (600), storing computer-executable instructions (610) non-transitorily, wherein the computer-executable instructions (610), when executed by a processor, implement the method according to any one of claims 1 to 6.

## Patentansprüche

1. Ein Datenverarbeitungsverfahren, umfassend:
(S101) als Reaktion auf das Empfangen einer Schreibanforderung von einem ersten Cache zum Zurückschreiben erster Daten in einen Speicher, Schreiben der ersten Daten durch einen Cache-Kohärenzknoten in den Speicher oder Verwerfen der ersten Daten, wobei die Schreibanforderung die ersten Daten enthält, der Cache-Kohärenzknoten dazu konfiguriert ist, Kohärenz von in einer Vielzahl von Caches gespeicherten Daten aufrechtzuerhalten, und die Vielzahl von Caches den ersten Cache umfasst;
(S102) nach dem Schreiben der ersten Daten durch den Cache-Kohärenzknoten in den Speicher oder Verwerfen der ersten Daten, Zurücksenden eines Schreibantwortsignals durch den Cache-Kohärenzknoten an den ersten Cache, um einen Verarbeitungsvorgang bezüglich der Schreibanforderung unmittelbar zu beenden;
als Reaktion auf das Empfangen einer Leseanforderung von einem zweiten Cache für die ersten Daten und auf das Feststellen, dass sich die ersten Daten wie von einer Cache-Kohärenzknoten-Seite aufgezeichnet in dem ersten Cache in einem exklusiven Zustand oder in einem gemeinsam genutzten Zustand befinden, Initiieren eines Überwachungssignals durch den Cache-Kohärenzknoten an den ersten Cache;
als Reaktion auf das Empfangen des Überwachungssignals durch den ersten Cache nach dem Initiieren der Schreibanforderung, Zurücksenden einer die ersten Daten enthaltenden Überwachungsantwort durch den ersten Cache an den Cache-Kohärenzknoten als Reaktion auf das Überwachungssignal;
als Reaktion auf das Empfangen der Überwachungsantwort, Zurücksenden der ersten Daten durch den Cache-Kohärenzknoten an den zweiten Cache; und
nach dem Empfangen der ersten Daten, Zurücksenden einer Nachricht durch den zweiten Cache an den Cache-Kohärenzknoten, die angibt, dass die ersten Daten empfangen wurden, um die Leseanforderung zu beenden;
**dadurch gekennzeichnet, dass**
nach dem Schreiben der ersten Daten durch den Cache-Kohärenzknoten in den Speicher oder Verwerfen der ersten Daten, das Zurücksenden des Schreibantwortsignals durch den Cache-Kohärenzknoten an den ersten Cache, um den Verarbeitungsvorgang bezüglich der Schreibanforderung unmittelbar zu beenden, umfasst:
nach dem Empfangen der Nachricht, Verwerfen der durch die Schreibanforderung in die Cache-Kohärenzknoten-Seite geschriebenen ersten Daten durch den Cache-Kohärenzknoten, und Zurücksenden des Schreibantwortsignals an den ersten Cache, um den Verarbeitungsvorgang bezüglich der Schreibanforderung unmittelbar zu beenden.

2. Das Datenverarbeitungsverfahren nach Anspruch 1, wobei als Reaktion auf das Empfangen der Schreibanforderung von dem ersten Cache zum Zurückschreiben der ersten Daten in den Speicher, das Schreiben der ersten Daten durch den Cache-Kohärenzknoten in den Speicher oder das Verwerfen der ersten Daten umfasst:
als Reaktion auf das Empfangen der Schreibanforderung von dem ersten Cache zum Zurückschreiben der ersten Daten in den Speicher, Feststellen durch den Cache-Kohärenzknoten, ob der erste Cache mit einem Cache identisch ist, der die ersten Daten wie von der Cache-Kohärenzknoten-Seite aufgezeichnet derzeit exklusiv hält; und
als Reaktion auf das Feststellen, dass der erste Cache mit dem Cache identisch ist, der die ersten Daten wie von der Cache-Kohärenzknoten-Seite aufgezeichnet derzeit exklusiv hält, Schreiben der ersten Daten durch den Cache-Kohärenzknoten in den Speicher.

3. Das Datenverarbeitungsverfahren nach Anspruch 1 oder 2, wobei nach dem Schreiben der ersten Daten durch den Cache-Kohärenzknoten in den Speicher oder Verwerfen der ersten Daten, das Zurücksenden des Schreibantwortsignals durch den Cache-Kohärenzknoten an den ersten Cache, um den Verarbeitungsvorgang bezüglich der Schreibanforderung unmittelbar zu beenden, umfasst:
nach dem Schreiben der ersten Daten durch den Cache-Kohärenzknoten in den Speicher, Zurücksenden einer Schreibantwort durch den Speicher an den Cache-Kohärenzknoten, die angibt, dass die ersten Daten in den Speicher geschrieben wurden; und
als Reaktion auf das Empfangen der Schreibantwort von dem Speicher, die angibt, dass die ersten Daten in den Speicher geschrieben wurden, Zurücksenden des Schreibantwortsignals durch den Cache-Kohärenzknoten an den ersten Cache, das angibt, dass die ersten Daten in den Speicher zurückgeschrieben wurden, um den Verarbeitungsvorgang bezüglich der Schreibanforderung unmittelbar zu beenden.

4. Das Datenverarbeitungsverfahren nach einem der Ansprüche 1 bis 3, ferner umfassend:
nach dem Schreiben der ersten Daten durch den Cache-Kohärenzknoten in den Speicher, Setzen eines Datenzustands des ersten Caches durch den Cache-Kohärenzknoten auf einen ungültigen Zustand, den gemeinsam genutzten Zustand, oder den exklusiven Zustand,
wobei der ungültige Zustand angibt, dass der erste Cache die ersten Daten nicht zwischenspeichert, der gemeinsam genutzte Zustand angibt, dass sowohl der erste Cache als auch ein anderer Cache die ersten Daten zwischenspeichern, und der exklusive Zustand angibt, dass nur der erste Cache die ersten Daten zwischenspeichert.

5. Das Datenverarbeitungsverfahren nach Anspruch 1, wobei als Reaktion auf das Empfangen der Überwachungsantwort, das Zurücksenden der ersten Daten durch den Cache-Kohärenzknoten an den zweiten Cache umfasst:
als Reaktion auf das Empfangen der Überwachungsantwort, Zurücksenden der ersten Daten durch den Cache-Kohärenzknoten an den zweiten Cache, und Setzen eines Datenzustands des zweiten Caches auf den exklusiven Zustand, wobei der exklusive Zustand angibt, dass nur der zweite Cache die ersten Daten zwischenspeichert.

6. Das Datenverarbeitungsverfahren nach Anspruch 1, wobei nach dem Empfangen der Nachricht, das Verwerfen der durch die Schreibanforderung in die Cache-Kohärenzknoten-Seite geschriebenen ersten Daten durch den Cache-Kohärenzknoten umfasst:
als Reaktion auf das Feststellen, dass die durch die Schreibanforderung in die Cache-Kohärenzknoten-Seite geschriebenen ersten Daten ungültige Daten sind, nach dem Empfangen der Nachricht, Verwerfen der durch die Schreibanforderung in die Cache-Kohärenzknoten-Seite geschriebenen ersten Daten durch den Cache-Kohärenzknoten.

7. Eine elektronische Vorrichtung (60), umfassend:
eine Vielzahl von Caches, umfassend einen ersten Cache (606) und einen zweiten Cache (607); und
einen Cache-Kohärenzknoten (605), der dazu konfiguriert ist:
als Reaktion auf das Empfangen einer Schreibanforderung von einem ersten Cache (606) zum Zurückschreiben erster Daten in einen Speicher, Schreiben der ersten Daten in den Speicher oder Verwerfen der ersten Daten; wobei die Schreibanforderung die ersten Daten enthält, und der Cache-Kohärenzknoten (605) dazu konfiguriert ist, Kohärenz von in der Vielzahl von Caches gespeicherten Daten aufrechtzuerhalten;
Zurücksenden eines Schreibantwortsignals an den ersten Cache (606), um einen Verarbeitungsvorgang bezüglich der Schreibanforderung unmittelbar zu beenden, nachdem der Cache-Kohärenzknoten (605) die ersten Daten in den Speicher geschrieben oder die ersten Daten verworfen hat;
als Reaktion auf das Empfangen einer Leseanforderung von dem zweiten Cache (607) für die ersten Daten und auf das Feststellen, dass sich die ersten Daten wie von einer Cache-Kohärenzknoten-Seite aufgezeichnet in dem ersten Cache (606) in einem exklusiven Zustand oder in einem gemeinsam genutzten Zustand befinden, Initiieren eines Überwachungssignals an den ersten Cache (606);
wobei der erste Cache (606) dazu konfiguriert ist, als Reaktion auf das Empfangen des Überwachungssignals nach dem Initiieren der Schreibanforderung, eine die ersten Daten enthaltende Überwachungsantwort an den Cache-Kohärenzknoten (605) als Reaktion auf das Überwachungssignal zurückzusenden;
der Cache-Kohärenzknoten (605) ferner dazu konfiguriert ist, als Reaktion auf das Empfangen der Überwachungsantwort, die ersten Daten an den zweiten Cache (607) zurückzusenden;
der zweite Cache (607) dazu konfiguriert ist, nach dem Empfangen der ersten Daten, eine Nachricht an den Cache-Kohärenzknoten (605) zurückzusenden, die angibt, dass die ersten Daten empfangen wurden, um die Leseanforderung zu beenden;
**dadurch gekennzeichnet, dass**
der Cache-Kohärenzknoten (605) dazu konfiguriert ist, nach dem Empfangen der Nachricht, die durch die Schreibanforderung in die Cache-Kohärenzknoten-Seite geschriebenen ersten Daten zu verwerfen, und das Schreibantwortsignal an den ersten Cache (606) zurückzusenden, um den Verarbeitungsvorgang bezüglich der Schreibanforderung unmittelbar zu beenden.

8. Die elektronische Vorrichtung (60) nach Anspruch 7, wobei der Cache-Kohärenzknoten (605) ferner dazu konfiguriert ist:
als Reaktion auf das Empfangen der Schreibanforderung von dem ersten Cache (606) zum Zurückschreiben der ersten Daten in den Speicher, festzustellen, ob der erste Cache (606) mit einem Cache identisch ist, der die ersten Daten wie von einer Cache-Kohärenzknoten-Seite aufgezeichnet derzeit exklusiv hält; und
als Reaktion auf das Feststellen, dass der erste Cache (606) mit dem Cache identisch ist, der die ersten Daten wie von der Cache-Kohärenzknoten-Seite aufgezeichnet derzeit exklusiv hält, die ersten Daten in den Speicher zu schreiben.

9. Die elektronische Vorrichtung (60) nach Anspruch 7 oder 8, wobei der Speicher dazu konfiguriert ist, nachdem der Cache-Kohärenzknoten (605) die ersten Daten in den Speicher geschrieben hat, eine Schreibantwort an den Cache-Kohärenzknoten (605) zurückzusenden, die angibt, dass die ersten Daten in den Speicher geschrieben wurden; und
wobei der Cache-Kohärenzknoten (605) ferner dazu konfiguriert ist, als Reaktion auf das Empfangen der Schreibantwort von dem Speicher, die angibt, dass die ersten Daten in den Speicher geschrieben wurden, das Schreibantwortsignal an den ersten Cache (606) zurückzusenden, das angibt, dass die ersten Daten in den Speicher zurückgeschrieben wurden, um den Verarbeitungsvorgang bezüglich der Schreibanforderung unmittelbar zu beenden.

10. Eine Datenverarbeitungsvorrichtung (500), umfassend:
einen Speicher (502), der dazu konfiguriert ist, computerausführbare Anweisungen zu speichern; und
einen Prozessor (501), der dazu konfiguriert ist, die computerausführbaren Anweisungen auszuführen,
wobei die computerausführbaren Anweisungen, wenn sie von dem Prozessor (501) ausgeführt werden, das Verfahren nach einem der Ansprüche 1 bis 6 implementieren.

11. Ein nichtflüchtiges Speichermedium (600), auf dem computerausführbare Anweisungen (610) nichtflüchtig gespeichert sind, wobei die computerausführbaren Anweisungen (610), wenn sie von einem Prozessor ausgeführt werden, das Verfahren nach einem der Ansprüche 1 bis 6 implementieren.

## Revendications

1. Procédé de traitement de données, comprenant :
(S101) en réponse à la réception d'une demande d'écriture en provenance d'un premier cache pour réécrire des premières données dans une mémoire, l'écriture, par un nœud de cohérence de cache, des premières données dans la mémoire ou le rejet des premières données, dans lequel la demande d'écriture transporte les premières données, le nœud de cohérence de cache est configuré pour maintenir la cohérence de données stockées dans une pluralité de caches, et la pluralité de caches comprennent le premier cache ;
(S102) après l'écriture, par le nœud de cohérence de cache, des premières données dans la mémoire ou le rejet des premières données, le renvoi, par le nœud de cohérence de cache, d'un signal de réponse d'écriture au premier cache pour terminer directement une opération de traitement sur la demande d'écriture ;
en réponse à la réception d'une demande de lecture en provenance d'un second cache pour les premières données et la détermination que les premières données sont dans un état exclusif ou un état partagé dans le premier cache telles qu'enregistrées par un côté nœud de cohérence de cache, l'amorce, par le nœud de cohérence de cache, d'un signal de surveillance vers le premier cache ;
en réponse à la réception, par le premier cache, du signal de surveillance après l'amorce de la demande d'écriture, le renvoi, par le premier cache, d'une réponse de surveillance transportant les premières données au nœud de cohérence de cache en réponse au signal de surveillance ;
en réponse à la réception de la réponse de surveillance, le renvoi, par le nœud de cohérence de cache, des premières données au second cache ; et
après la réception des premières données, le renvoi, par le second cache, d'un message au nœud de cohérence de cache indiquant que les premières données ont été reçues pour terminer la demande de lecture ;
**caractérisé en ce que** :
dans lequel, après l'écriture, par le nœud de cohérence de cache, des premières données dans la mémoire ou le rejet des premières données, le renvoi, par le nœud de cohérence de cache, du signal de réponse d'écriture au premier cache pour terminer directement l'opération de traitement sur la demande d'écriture comprend :
après la réception du message, le rejet, par le nœud de cohérence de cache, des premières données écrites côté nœud de cohérence de cache par la demande d'écriture, et le renvoi du signal de réponse d'écriture au premier cache pour terminer directement l'opération de traitement sur la demande d'écriture.

2. Procédé de traitement de données selon la revendication 1, dans lequel en réponse à la réception de la demande d'écriture provenant du premier cache pour réécrire les premières données dans la mémoire, l'écriture, par le nœud de cohérence de cache, des premières données dans la mémoire ou le rejet des premières données comprennent :
en réponse à la réception de la demande d'écriture provenant du premier cache pour réécrire les premières données dans la mémoire, la détermination, par le nœud de cohérence de cache, si le premier cache est le même qu'un cache détenant couramment exclusivement les premières données telles qu'enregistrées côté nœud de cohérence de cache ; et
en réponse à la détermination que le premier cache est le même que le cache détenant couramment exclusivement les premières données telles qu'enregistrées côté nœud de cohérence de cache, l'écriture, par le nœud de cohérence de cache, des premières données dans la mémoire.

3. Procédé de traitement de données selon la revendication 1 ou 2, dans lequel, après l'écriture, par le nœud de cohérence de cache, des premières données dans la mémoire ou le rejet des premières données, le renvoi, par le nœud de cohérence de cache, du signal de réponse d'écriture au premier cache pour terminer directement l'opération de traitement sur la demande d'écriture comprend :
après l'écriture, par le nœud de cohérence de cache, des premières données dans la mémoire, le renvoi, par la mémoire, d'une réponse d'écriture au nœud de cohérence de cache indiquant que les premières données ont été écrites dans la mémoire ; et
en réponse à la réception de la réponse d'écriture provenant de la mémoire indiquant que les premières données ont été écrites dans la mémoire, le renvoi, par le nœud de cohérence de cache, du signal de réponse d'écriture au premier cache indiquant que les premières données ont été réécrites dans la mémoire, pour terminer directement l'opération de traitement sur la demande d'écriture.

4. Procédé de traitement de données selon l'une des revendications 1 à 3, comprenant en outre :
après l'écriture, par le nœud de cohérence de cache, des premières données dans la mémoire, le réglage, par le nœud de cohérence de cache, d'un état de données du premier cache sur un état invalide, l'état partagé ou l'état exclusif,
dans lequel l'état invalide indique que le premier cache ne met pas en cache les premières données, l'état partagé indique que le premier cache et un autre cache mettent tous deux en cache les premières données, et l'état exclusif indique que seul le premier cache met en cache les premières données.

5. Procédé de traitement de données selon la revendication 1, dans lequel en réponse à la réception de la réponse de surveillance, le renvoi, par le nœud de cohérence de cache, des premières données au second cache comprend :
en réponse à la réception de la réponse de surveillance, le renvoi, par le nœud de cohérence de cache, des premières données au second cache, et le réglage d'un état de données du second cache sur l'état exclusif, dans lequel l'état exclusif indique que seul le second cache met en cache les premières données.

6. Procédé de traitement de données selon la revendication 1, dans lequel, après la réception du message, le rejet, par le nœud de cohérence de cache, des premières données écrites côté nœud de cohérence de cache par la demande d'écriture comprend :
en réponse à la détermination que les premières données écrites côté nœud de cohérence de cache par la demande d'écriture sont des données invalides après la réception du message, le rejet, par le nœud de cohérence de cache, des premières données écrites côté nœud de cohérence de cache par la demande d'écriture.

7. Dispositif électronique (60), comprenant :
une pluralité de caches, comprenant un premier cache (606) et un second cache (607) ; et
un nœud de cohérence de cache (605), configuré pour :
en réponse à la réception d'une demande d'écriture provenant d'un premier cache (606) pour réécrire des premières données dans une mémoire, écrire les premières données dans la mémoire ou rejeter les premières données ; dans lequel la demande d'écriture transporte les premières données, et le nœud de cohérence de cache (605) est configuré pour maintenir la cohérence de données stockées dans la pluralité de caches ;
renvoyer un signal de réponse d'écriture au premier cache (606) pour terminer directement une opération de traitement sur la demande d'écriture après que le nœud de cohérence de cache (605) a écrit les premières données dans la mémoire ou rejette les premières données ;
en réponse à la réception d'une demande de lecture provenant du second cache (607) pour les premières données et à la détermination que les premières données sont dans un état exclusif ou un état partagé dans le premier cache (606) telles qu'enregistrées par un côté nœud de cohérence de cache, amorcer un signal de surveillance vers le premier cache (606) ;
dans lequel le premier cache (606) est configuré pour, en réponse à la réception du signal de surveillance après l'amorce de la demande d'écriture, renvoyer une réponse de surveillance transportant les premières données vers le nœud de cohérence de cache (605) en réponse au signal de surveillance ;
le nœud de cohérence de cache (605) est en outre configuré pour, en réponse à la réception de la réponse de surveillance, renvoyer les premières données au second cache (607) ;
le second cache (607) est configuré pour, après la réception des premières données, renvoyer un message au nœud de cohérence de cache (605) indiquant que les premières données ont été reçues pour terminer la demande de lecture ;
**caractérisé en ce que** :
le nœud de cohérence de cache (605) est configuré pour, après la réception du message, rejeter les premières données écrites côté nœud de cohérence de cache par la demande d'écriture, et renvoyer le signal de réponse d'écriture au premier cache (606) pour terminer directement l'opération de traitement sur la demande d'écriture.

8. Dispositif électronique (60) selon la revendication 7, dans lequel le nœud de cohérence de cache (605) est en outre configuré pour :
en réponse à la réception de la demande d'écriture provenant du premier cache (606) pour réécrire les premières données dans la mémoire, déterminer si le premier cache (606) est le même qu'un cache détenant couramment exclusivement les premières données telles qu'enregistrées côté nœud de cohérence de cache ; et
en réponse à la détermination que le premier cache (606) est le même que le cache détenant couramment exclusivement les premières données telles qu'enregistrées côté nœud de cohérence de cache, écrire les premières données dans la mémoire.

9. Dispositif électronique (60) selon la revendication 7 ou 8, dans lequel la mémoire est configurée pour, après que le nœud de cohérence de cache (605) a écrit les premières données dans la mémoire, renvoyer une réponse d'écriture au nœud de cohérence de cache (605) indiquant que les premières données ont été écrites dans la mémoire ; et
le nœud de cohérence de cache (605) est en outre configuré pour, en réponse à la réception de la réponse d'écriture provenant de la mémoire indiquant que les premières données ont été écrites dans la mémoire, renvoyer le signal de réponse d'écriture au premier cache (606) indiquant que les premières données ont été réécrites dans la mémoire, pour terminer directement l'opération de traitement sur la demande d'écriture.

10. Appareil de traitement de données (500), comprenant :
une mémoire (502), configurée pour stocker des instructions exécutables par ordinateur ; et
un processeur (501), configuré pour exécuter les instructions exécutables par ordinateur,
dans lequel les instructions exécutables par ordinateur, lorsqu'elles sont exécutées par le processeur (501), mettent en œuvre le procédé selon l'une des revendications 1 à 6.

11. Support de stockage non transitoire (600), stockant de manière non transitoire des instructions exécutables par ordinateur (610), dans lequel les instructions exécutables par ordinateur (610), lorsqu'elles sont exécutées par un processeur, mettent en œuvre le procédé selon l'une des revendications 1 à 6.
